# EUROPEAN PATENT SPECIFICATION

(11) **EP 3 235 760 B1**
(45) Date of publication and mention of the grant of the patent: **09.12.2020**
(21) Application number: 17167650.5
(22) Date of filing: 21.04.2017
(51) Int. Cl.: B65F 1/10, B65F 3/02

(54) **A REFUSE COLLECTION DOOR ASSEMBLY**
ABFALLSAMMLUNGSTÜRANORDNUNG
ENSEMBLE D'UNE PORTE DE COLLECTE D'ORDURES

(30) Priority: 21.04.2016 GB 201606963
(43) Date of publication of application: 25.10.2017
(73) Proprietor: McKeown, John, County Offaly (IE)
(72) Inventor: McKeown, John, County Offaly (IE)
(74) Representative: Schütte, Gearoid

(56) References cited:
- DE-C- 163 284
- DE-C- 170 639
- US-A- 822 265

## Description

### Introduction

The invention relates to a refuse collection door assembly according to the preamble of claim 1. The refuse collection door assembly may be used in various installations and is not limited to use on only a refuse collection vehicle. For example, the refuse collection door assembly of the present invention may be employed on static refuse collection bins and so on.

Throughout this specification, the term "glass" has been occasionally used when describing the function of the present invention. It shall be understood that "glass" encompasses various types of fragile materials which have been disposed of for recycling and/or dumping. Such fragile materials would encompass glass, ceramics, porcelain, delft and the like. These types of materials are likely to break when disposed of into a refuse collection compartment, causing noise to be created, and, possibly causing the fragile materials to also shatter and splinter, thus potentially causing shattered and splintered parts to rebound from the refuse collection compartment. It will be readily appreciated that various other types of breakable fragile materials may have one or both of these characteristics therefore making the refuse collection door assembly of the present invention particularly suitable for use with those breakable fragile materials also. However, it will be appreciated that the refuse collection assembly could also be used for non-fragile refuse types, such as general waste and paper-based waste also; in particular for refuse which is undesirable to handle and to be exposed to, such that the handling and exposure should be kept to a minimum. Refuse such as toxic waste, contaminated refuse, medical refuse, building material refuse, chemicals-based refuse would be example of such undesirable refuse to handle and/or be exposed to. Thus the scope of the invention is envisaged to cover many different refuse types and should not be seen to be limited to glass items only, although the term 'glass' shall be used occasionally hereinafter for clarity and brevity when discussing and describing the present invention as the refuse collection door assembly of the present invention is particularly apt for collection of glass refuse.

In this specification the term "wheeled chassis" includes not just simply a trailer mounted on wheels for towing behind a vehicle, but also a vehicle itself and any other form of transporting device or equipment. Indeed, one could well envisage situations where the chassis would not have wheels would simply be loaded on an off a transport vehicle while resting on legs. However, in general the chassis would-be wheeled trailers or vehicles. Thus, the term "wheeled chassis" must be accorded the widest possible interpretation. Whilst the present invention is envisaged to be used on a wheeled chassis of a refuse collection vehicle in its preferred embodiment, the invention is also envisaged to be used on standing refuse collection structures which are immobile. For example, the refuse collection door assembly of the present invention could be used on street bins, or on refuse collection compartments at dump sites and the like.

Additionally, in this specification, the terms "distal" and "proximal" are essentially used for convenience and do not, strictly speaking, in any way limit the invention in the sense that something should always be at one particular end of a vehicle or container.

The type of refuse collection vehicle which will be referred to in a preferred embodiment of this invention shall be a multi-compartment refuse collection container which is mounted on a wheeled chassis. An example of such a refuse collection vehicle is disclosed in document EP-A-2 386 504 which is in the name of the Applicant. Such a vehicle comprises a plurality of side-by-side in-line refuse receiving compartments mounted on a wheeled chassis. The side-by-side in-line refuse receiving compartments are used for collecting and separating different types of refuse. For example, paper and cardboard may be collected in one compartment, whilst glass and breakables may be collected in a different compartment, whilst plastics will be collected in yet a different compartment and so on. It is envisaged that specialised waste, such as medical waste, or building materials waste could be collected separately in a separate refuse receiving compartment. Furthermore, it will be appreciated that such vehicles may also be equipped with compartments to collect toxic or contaminated refuse, or, refuse which requires special attention during its collection (due to odour or harmful effects) and/or during its subsequently treatment and disposal.

Collection and discharge of glass materials is troublesome for operators of refuse collection vehicles. For example, under U.K. law, there is an 85dB noise limit for daily personal noise exposure which a recyclable refuse vehicle operator may be subjected to during their working day. As the collection and discharge of glass can result in relatively high noise levels, solutions to minimise the noise levels which operators are subjected to are sought. Other types of refuse, such as metals and building materials could also cause excessive noise to be generated when the refuse is collected.

Moreover, as mentioned hereinbefore, glass often breaks and shatters during collection. The shattered and broken shards and pieces of glass can rebound back towards the operating as the glass is being collected and disposed into the glass collection compartment.

Furthermore, other types of refuse may be undesirable to handle due to the refuse being toxic refuse or contaminated refuse, the refuse may be medical waste or building waste. It may thus be desirable to keep the handling of such waste to a minimum and prevent any rebounding of such waste out of the refuse collection compartment when the refuse is being tipped into the refuse collection compartment.

Prior art solutions use refuse collection compartments which comprise noise reducing plastic flaps over the holes. However, over time, these flaps become damaged due to weathering and usage and become less effective at supressing noise. Furthermore, the plastic flaps do not allow a tight seal to be formed between the refuse collection compartment and the refuse collection bin, when the refuse in the refuse collection bin is being tipped into the refuse collection compartment.

Other prior art solutions involve the use of internal baffle plates, or baffle brushes to interrupt the fall of the refuse as it is being tipped into the refuse collection compartment. This is particularly prominent in glass refuse receiving compartments. This is again designed to reduce the noise created by the breaking glass, and reduce the possibility of shatter glass pieces rebound out from the glass collection compartment and towards the operator.

However, such solutions do not always lower the noise created due to the glass collection to a level below the legal threshold, or even lower to be acceptable to passers-by and the public.

Posting holes are also known to be used in order to minimise the noise levels as glass and other types of refuse is disposed of into a refuse collection compartment. These posting holes are located on the exterior of the refuse collection compartment and are dimensioned to accept glass bottles and similar sized small pieces of refuse the like into the refuse collection compartment. The posting holes will comprise of a flap which covers the opening of the posting hole. The flap may be partially cut to allow the flap to deform as the refuse to be disposed of is passed through the opening. In this way, as soon as the refuse is passed into the opening and is falling into the refuse collection compartment, the flap will bias back towards a covering position and muffle noise emanating from the refuse collection compartment as the refuse lands inside the refuse collection compartment. The issue with these types of flaps is that they cannot form a full seal by virtue of being partially cut, and, over time the flap becomes damaged and bent such that the seal becomes less effective. Moreover, posting holes do not allow the operator to unload a complete refuse collection bin; it is necessary for the operator to dispose of the refuse individually through the posting hole which is time consuming and may also result in the operator having to handle the refuse directly which is undesirable for toxic refuse or contaminated refuse or broken glass refuse.

There are a number of prior art refuse collecting solutions which are known, however none of the prior art solutions solves the problems identified hereinbefore in an adequate manner.

US 822,265 discloses a refuse collection door assembly according to the preamble of claim 1 having an inner flap hinged at a top of the flap at a chute-opening in a dustcart. An outer bin-carrying frame is hinged at its lower end in the chute-opening. When a bin is mounted on the frame, the frame can swing inwardly, pushing back the flap to empty the bin contents into the dustcart.

Korean Patent Publication Number KR100698884 (DOWHA CONSULTING ENGINEERS CO. LTD) discloses a waste collecting box having an offensive odour overflow preventing structure. The waste collecting box prevents the discharge of the offensive odour by interrupting a passage connected to the body of the collecting box when the cover of the collecting box is opened to introduce the waste.

JP2006096561 (MITACHI PACKAGE KK et al.) discloses a refuse collecting vehicle which can simultaneously collect several different kinds of refuse. The refuse collecting vehicle selects and sorts the refuse to be collected from the separated refuse without manual input.

FR2968282 (AGUENTIS) discloses a refuse collecting bin. The refuse collecting bin has a lid placed on a rim of a vessel. The lid comprises a passage for objects to be placed into the vessel, and closing units to seal the passage. The closing units are movable between a closed position and an open position. The lid has actuating units to open the closing units and to maintain the closing units in the open position. The closing units comprise flaps that pivot about corresponding axes. The actuating units have a flap controlling mechanism to actuate opening of the flaps via a lever.

All of these prior art documents suffer from the issues described above as none of the prior art solutions allow a substantially full seal to be created around a refuse collection bin as the refuse from the refuse collection bin is being tipped into the refuse collection compartment.

It is a goal of the present invention to provide a refuse collection door assembly that overcomes and/or improves at least one of the above mentioned problems.

### Summary of the Invention

The present invention is directed towards a refuse collection door assembly suitable for use with a refuse collection compartment, the refuse collection door assembly comprising an inner plate and an outer plate arranged adjacent each other; whereby, the inner plate is hinged along its uppermost edge to the refuse collection compartment, and, the outer plate is hinged along its lowermost edge to the refuse collection compartment; the outer plate comprising a refuse receiving through hole which allows refuse to pass through to the refuse collection compartment; and the outer plate comprises elements provided adjacent an uppermost edge of the outer plate which engage against the inner plate when the outer plate is rotated toward the inner plate. According to the invention the elements on the outer plate are friction reducing elements comprising rollers and the inner plate comprises securing arms having a slight curvature provided on an outer face of the inner plate to accept the rollers when the inner plate is in its closed position, and due to the slight curvature of the securing arms, the rollers when abutting against the securing arms cause the securing arms to pull on the inner plate and urge the inner plate to rotate outwardly towards the outer plate.

The advantage of providing the refuse collection door assembly as described hereinabove is that noise levels may be reduced as the inner plate and outer plate act in a co-operating fashion so as to form a substantially continuous and fully sealed connection as the refuse collection door assembly is opened and closed. The danger of refuse (such as glass shards, toxic refuse, contaminated refuse, shattered pieces and the like) rebounding out of the refuse collection compartment back towards an operator is also greatly reduced.

In a further embodiment, the inner plate is hinged along its uppermost edge to a side wall of the refuse collection compartment and the outer plate is hinged along its lowermost edge to a side wall of the refuse collection compartment. In a further embodiment, the side wall of the refuse collection compartment comprises an ope, and the inner plate is hinged along its uppermost edge to an upper edge of the ope on the side wall of the refuse collection compartment.

In a further embodiment, refuse collection bin mounting hooks are provided on the outer plate, adjacent the lowermost edge of the outer plate.

In a further embodiment, side wings are provided to assist in creating a substantially full seal when emptying refuse into the refuse collection compartment. In a further embodiment, the side wings are secured to the side wall of the refuse collection compartment and depend inwardly into the refuse collection compartment. The side wings may be comprised of a plurality of portions which allow the side wings to fan out into a deployed state and collapse back into a retracted state.

In a further embodiment, lip seals are provided along side edges of the inner plate and/or the outer plate. In a further embodiment, a lip seal is provided along the uppermost edge of the outer plate.

These lip seal further assist in reducing the noise level which can emanate from the refuse collection compartment as the refuse is disposed of into the refuse collection compartment.

In a further embodiment, the inner plate comprises an offset hinge along its uppermost edge which angles the inner plate towards the outer plate, when the inner plate is in a closed position. This assists in urging the inner plate, and by consequence the outer plate, towards a closed position. It will be appreciated that the offset hinge shall be interpreted throughout this specification as any type of hinge which causes the inner plate to hang in an off-vertical resting position such that a lower portion of the inner plate is projected towards the outer plate.

In a further embodiment, refuse collection door assembly comprises a locking means to secure the inner plate to the outer plate and maintain the refuse collection door assembly in a closed position.

The inner plate and the outer plate may be rigid plates. The inner plate and the outer plate may be substantially planar plates.

The refuse collection compartment may be mounted on a refuse collection vehicle.

The refuse collection door assembly may be mounted on a refuse collection vehicle.

The refuse collection door assembly may be mounted within a recess set into a side wall of the refuse collection vehicle.

The refuse collection door assembly may be mounted on a static refuse collection bin.

### Detailed Description of Embodiments

The invention will be more clearly understood from the following description of some embodiments thereof, given by way of example only, with reference to the accompanying drawings, in which:
Figure 1a is a perspective view of a refuse collection vehicle comprising a refuse collection compartment having a refuse collection door assembly in accordance with the present invention;
Figure 1b is a perspective view of the refuse collection door assembly of Figure 1a, in use (without a refuse collection bin being shown);
Figure 2 is a perspective partially exploded detail view of the refuse collection door assembly of Figure 1a;
Figure 3 is a perspective detail view of the refuse collection door assembly of Figure 2, in use on a side wall of a refuse collection compartment (without a refuse collection bin being shown);
Figure 4a is a rear cross-sectional view of the refuse collection vehicle of Figure 1a, showing the refuse collection door assembly, of the refuse collection compartment, in a closed position;
Figure 4b is a rear cross-sectional view of the refuse collection vehicle of Figure 1a, showing the refuse collection door assembly, of the refuse collection compartment, in a partially open position;
Figure 4c is a rear cross-sectional view of the refuse collection vehicle of Figure 1a, showing the refuse collection door assembly, of the refuse collection compartment, in a partially open position;
Figure 4d is a rear cross-sectional view of the refuse collection vehicle of Figure 1a, showing the refuse collection door assembly, of the refuse collection compartment, in a partially open position;
Figure 4e is a rear cross-sectional view of the refuse collection vehicle of Figure 1a, showing the refuse collection door assembly, of the refuse collection compartment, in an open position;
Figure 5a is a detail side view of the refuse collection door assembly of Figure 4a;
Figure 5b is a detail side view of the refuse collection door assembly of Figure 4b;
Figure 5c is a detail side view of the refuse collection door assembly of Figure 4c;
Figure 5d is a detail side view of the refuse collection door assembly of Figure 4d;
Figure 5e is a detail side view of the refuse collection door assembly of Figure 4e;
Figure 6 is a side view of a refuse collection bin hanging on refuse collection bin mounting hooks of the refuse collection door assembly of Figure 2;
Figure 7a is a perspective view of the refuse collection bin of Figure 6 hanging on the refuse collection bin mounting hooks and rotated to abut against an outer plate of the refuse collection door assembly, with the outer plate still in a closed position, in accordance with the present invention;
Figure 7b is a perspective view of the refuse collection door assembly of Figure 7a, in its open position, such that the outer plate and the inner plate have rotated to an open position and refuse in the refuse collection bin can be tipped into the refuse collection compartment in accordance with the present invention;
Figure 8 is a side elevation detail view of an inner plate of the refuse collection door assembly of the present invention;
Figure 9 is a front elevational view of a refuse collection hole of the refuse collection door assembly of the present invention;
Figure 10a is a rear cross-sectional view of the refuse collection vehicle with a further embodiment of the refuse collection door assembly, whereby the refuse collection bin of Figure 6 is hanging on the refuse collection bin mounting hooks and is in a substantially horizontal position;
Figure 10b is a rear cross-sectional view of the refuse collection vehicle with the further embodiment of the refuse collection door assembly of Figure 10a, with refuse collection bin rotated on the mounting hooks so as to abut against an outer plate of the refuse collection door assembly, with the outer plate still in a closed position; and,
Figure 10c is a rear cross-sectional view of the refuse collection vehicle with the further embodiment of the refuse collection door assembly of Figure 10a, with the outer plate of the refuse collection door assembly in its open position, such that the outer plate and the inner plate have rotated to an open position and refuse in the refuse collection bin can be tipped into the refuse collection compartment.

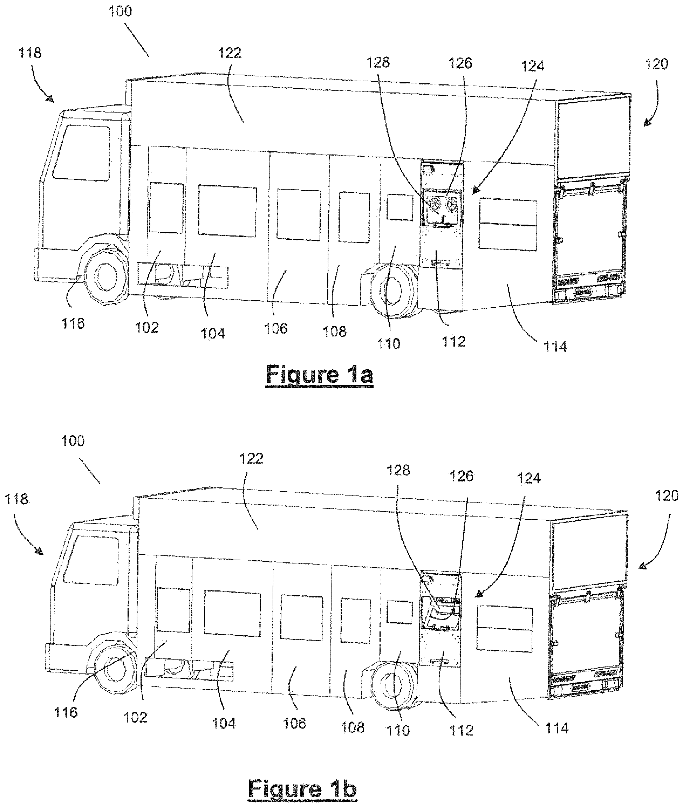

Referring to Figure 1, there is shown a refuse collection vehicle generally indicated by reference numeral 100. The refuse collection vehicle 100 comprises a plurality of side-by-side in-line refuse receiving compartments 102, 104, 106, 108, 110, 112, 114 mounted on a wheeled chassis 116 of the refuse collection vehicle 100. The side-by-side in-line refuse receiving compartments 102, 104, 106, 108, 110, 112, 114 are arranged in line from adjacent a proximal end 118 of the chassis 116 towards a distal end 120 of the wheeled chassis 116. An enclosed upper compartment 122 is also provided and the upper compartment 122 extends above the side-by-side in-line refuse receiving compartments 102, 104, 106, 108, 110, 112, 114, from adjacent the proximal end 118 of the chassis 116 to the distal end 120 of the wheeled chassis 116.

The side-by-side in-line refuse receiving compartments 102, 104, 106, 108, 110, 112, 114 are assigned by an operator to receive different types and categories of refuse. One of the side-by-side in-line refuse receiving compartments is a refuse collection compartment 112. In a preferred embodiment, the refuse collection compartment 112 is a glass collection compartment 112, although it will be appreciated the that the refuse collection compartment 112 can be used to receive and collect various types of refuse.

The refuse collection compartment 112 comprises a refuse collection door assembly indicated generally by reference numeral 124. The refuse collection door assembly 124 comprises an outer plate 126 and an inner plate 128.

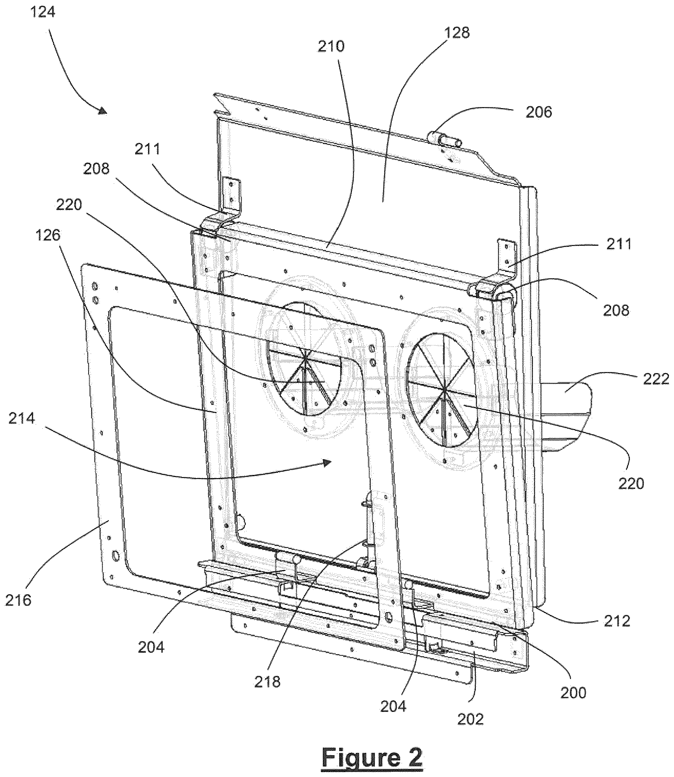

Referring now to Figure 2, the refuse collection door assembly 124 is shown in greater detail. As mentioned, the refuse collection door assembly 124 comprises an outer plate 126 and an inner plate 128 which are arranged adjacent each other and substantially in parallel, although in a preferred embodiment, at least one of the plates 126, 128 may be angled towards a closed position, as discussed in detail further below.

The outer plate 126 comprises a refuse receiving through hole indicated generally by reference numeral 214. The outer plate 126 is thus essentially frame-shaped. The outer plate 126 is hinged along its lowermost edge 200 to a lower side wall 202 of the refuse collection compartment 112. It will be readily understood that the outer plate 126 could alternatively be hinged along its lowermost edge 200 to a floor section or a shelf section (not shown) of the refuse collection compartment 112, or indeed any part of the refuse collection compartment 112 which would allow the outer plate 126 to swing inwardly into the refuse compartment 112 about its hinge. Refuse collection bin mounting hooks 204 are provided on the outer plate 126 adjacent its lowermost edge 200. It will be appreciated that the refuse collection bin mounting hooks 204 may alternatively be provided on a side wall of the refuse collection compartment 112, if the refuse collection bin mounting hooks 204 were to be positioned directly beneath the lower hinge of the outer plate 126. A lip, a narrow shelf, or alternative hooking means could of course be used in place of the refuse collection bin mounting hooks 204.

The inner plate 128 is hinged along its uppermost edge 206 to a side wall (not shown) of the refuse collection compartment 112. It will be readily understood that the inner plate 128 could alternatively be hinged along its uppermost edge 206 to a roof section (not shown) of the refuse collection compartment 112, or indeed any part of the refuse collection compartment 112 which would allow the inner plate 128 to swing inwardly into the refuse compartment 112 about its hinge.

Rollers 208 which act as friction reducing elements are provided adjacent an uppermost edge 210 of the outer plate 126 such that as the outer plate 126 is rotated about its lower hinge, towards the inner plate 128, the rollers 208 will engage against a face of the inner plate 128 and exert a force on the inner plate 128 due to the rotation of the outer plate 126. The force exerted on the inner plate 128 will cause the inner plate to rotate about its upper hinge, away from the outer plate 126. The rollers 208 allow the inner plate 128 and the outer plate 126 to slide more freely against each other, even when abutting against each other. In this way, the refuse collection door assembly, which is shown in its closed position in Figure 1a, can be pushed to its open position which is shown in Figure 1b.

The inner plate 128 and the outer plate 126 both rotated inwardly into the refuse collection compartment 112, when the refuse collection door assembly 124 is opened. After refuse has been discharged from a refuse collection bin (not shown), and has passed through the refuse receiving hole 214 of the outer plate 126, and disposed of into the refuse collection compartment 112, the operator will allow the refuse collection door assembly to return to it closed position. The lower hinge and upper hinge provided on the inner plate 128 and the outer plate 126 respectively may be biased to assist in this outward rotation. However, it will be readily understood that the weight of the inner plate 128 will also act on the outer plate 126 and urge the outer plate 126 to rotate outwardly from the refuse collection compartment 112. Furthermore, an offset hinge may be used to hinge the inner plate 128 so that the inner plate 128 is angled towards the outer plate 126 when the plates 126, 128 are in their closed positions.

Stops may preferably be provided within the refuse collection compartment 112 to limit the inward rotation of the outer plate 126 and/or inner pate 128 to a predetermined angle. As shown in Figure 2, securing arms 211 are provided on an outer face of the inner plate 128 to accept the rollers 208 and due to a slight curvature of the securing arms 211, the rollers 208 when abutting against the arms 211, will cause the securing arms 211 to pull on the inner plate 128 and urge the inner plate 128 to rotate outwardly towards the outer plate 126, although the presence of the outer plate 126 will actually prevent the inner plate 128 from doing so. However, in this way, the inner plate 128 and the outer plate 126 can be somewhat secured in the closed position by the act of the securing arms 211 arrangement when the refuse collection door assembly 124 is in the closed position.

A locking means 218 may preferably be provided on the inner plate 128, adjacent a lowermost edge 212 of the inner plate 128, and the locking means 218 can lock the inner plate 128 to the outer plate 126 so as to fixedly secure the refuse collection door assembly 124 in its closed position, which is useful and recommended where the refuse collection vehicle is travelling extended distances between collection points, and/or to/from its collection route from the refuse collection centre.

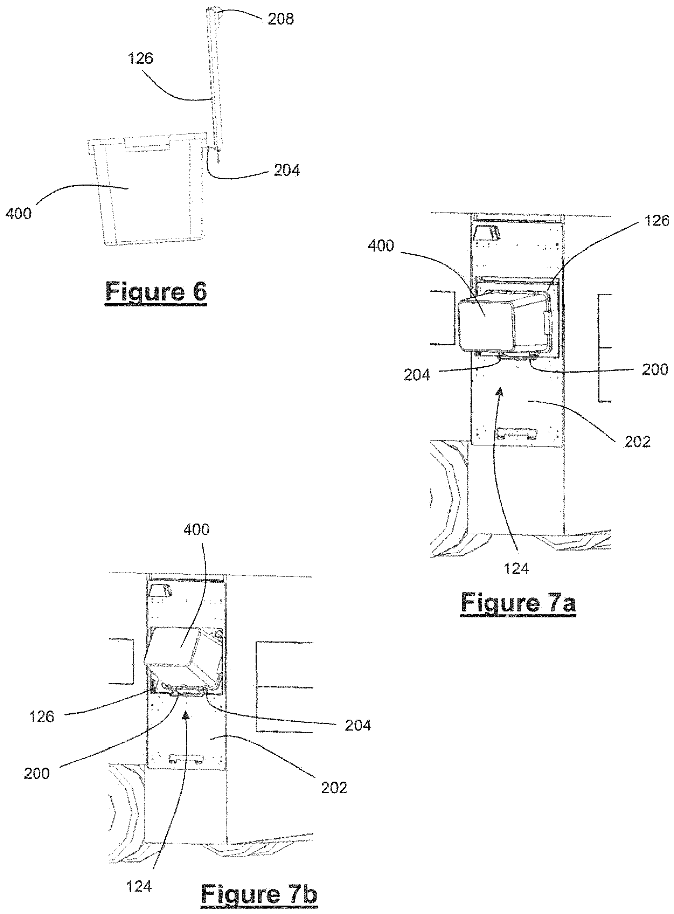

In Figure 2, there is also shown an adaptor plate 216. The adaptor plate 216 is fixable to the outer plate 126 and is used to accommodate differently sized refuse collection bins (not shown). The type of refuse collection bin which will co-operate most readily with the present invention is a bucket type of bin having an open top. The purpose of the frame-shaped outer plate 126 and/or the adaptor plate 216 is to facilitate a substantially full seal with an upper top edge of a refuse collection bin of the type shown in Figure 6. As there are different sizes of refuse collection bins used by different county councils, city authorities and so on, it is advantageous to provide adaptor plates 216 which can be easily fixed to the outer plate 126 and allow different sized refuse receiving holes 214 to be formed, which are suitable for operating in conjunction with a correspondingly sized refuse collection bin. It will be appreciated that the outer plate 126 will have a large refuse receiving hole 214, and the adaptor plates 216 would have smaller refuse receiving holes, such that the use of the adaptor plate 216 will reduce the size of the refuse receiving hole 214 and thus accommodate smaller sizes of refuse collection bins.

In a preferred embodiment, lip seals (not shown) may be used between the uppermost edge 210 of the outer plate 126 and the inner plate 128 to assist in forming a substantially full seal, and, side edges of both the outer plate 126 and the inner plate 128 may also comprise lip seals in order to assist in forming a substantially full seal. It is preferable to form as full a seal as is possible in order to reduce the noise level as much as possible, which noise will emanate from the refuse collection compartment 112 when refuse is disposed into the refuse collection compartment 112.

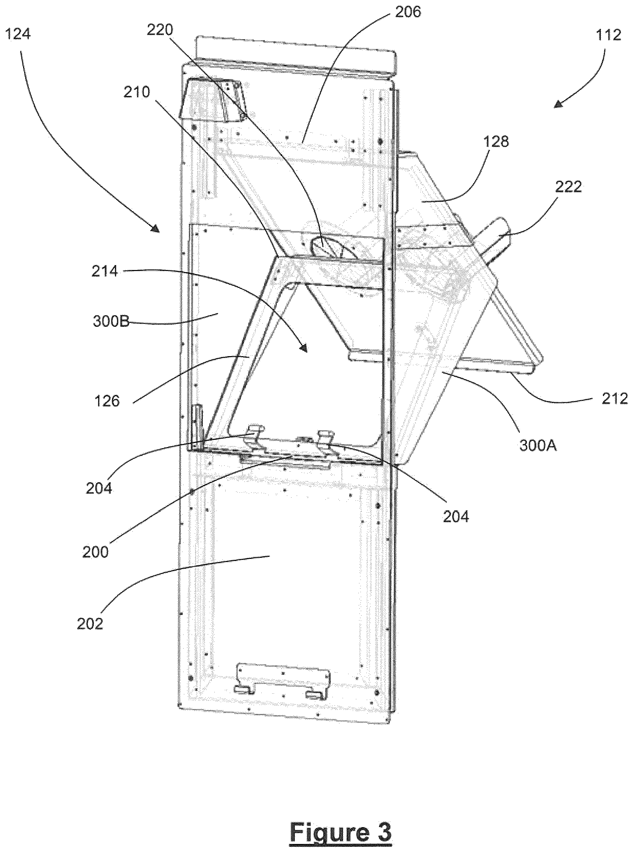

To further assist with this creation of a sealed refuse collection door assembly 124, as shown in Figure 3, a pair of side wings 300A, 300B may be provided within the refuse collection compartment 112. The side wings 300A, 300B are preferably secured to a side wall of the refuse collection compartment 112 and depend away from the side wall and inwardly into the refuse collection compartment 112. The side wings 300A, 300B allow a substantially full seal to be maintained as the refuse collection door assembly 124 is opened and the inner plate 128 and the outer plate 126 are rotated inwardly into the refuse collection compartment. Lip seals on side edges of the inner plate 128 and the outer plate 126 may preferable abut against the side wings 300A, 300B to assist in forming the substantially full seal. The side wings 300A, 300B may also support the stops mentioned hereinabove, which may be used to limit the angle of rotation of the inner plate 128 and the outer plate 126.

As can be seen in Figures 2 and 3, one or more posting hole(s) 220 are provided on the inner plate 128. These posting hole(s) 220 may be used if just a single piece of refuse is to be disposed of into the refuse collection compartment. The posting hole(s) 220 comprises a chute 222 which extends away from an inner face of the posting hole(s) 220, inwardly into the refuse receiving compartment 112. A rubber seal is also provided to, again, mitigate the nose level resulting from the disposal of refuse in the refuse collection compartment 112.

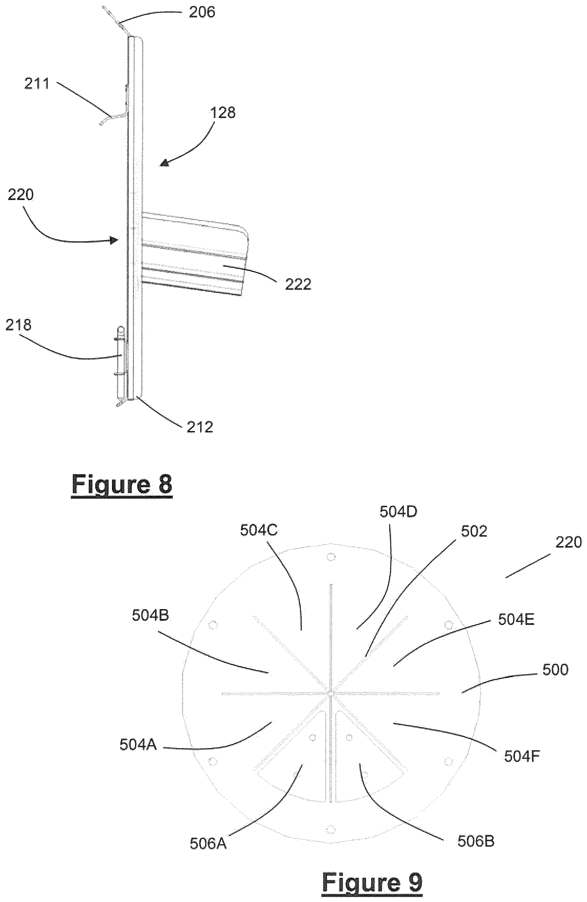

Referring briefly to Figure 9, the rubber seal 500 of the posting hole(s) 220 is shown. The rubber seal 500 is substantially disc shaped and comprises a plurality of radially extended cuts, originating from a substantially central position on the disc-shaped rubber seal 500 to form a plurality of deformable triangular-shaped flaps 504A, 504B, 504C, 504D, 504E, 504F, 506A, 506B. At least one of more of the flaps 506A, 506B is a non-return flap. These non-return flaps 506A, 506B may preferably be made of a plastics material and/or prevented from folding outwardly away from the refuse collection compartment. In this way, refuse cannot become discharged out of the refuse collection compartment, by way of passing through the posting hole(s) 220 due to these non-return flaps 506A, 506B.

If the refuse collection compartment 112 is almost full, the inner plate 128 and the outer plate 126 may be locked together using the locking means 218 and the post hole(s) 220 may be used to fill up the remaining portion of the refuse collection compartment 112.

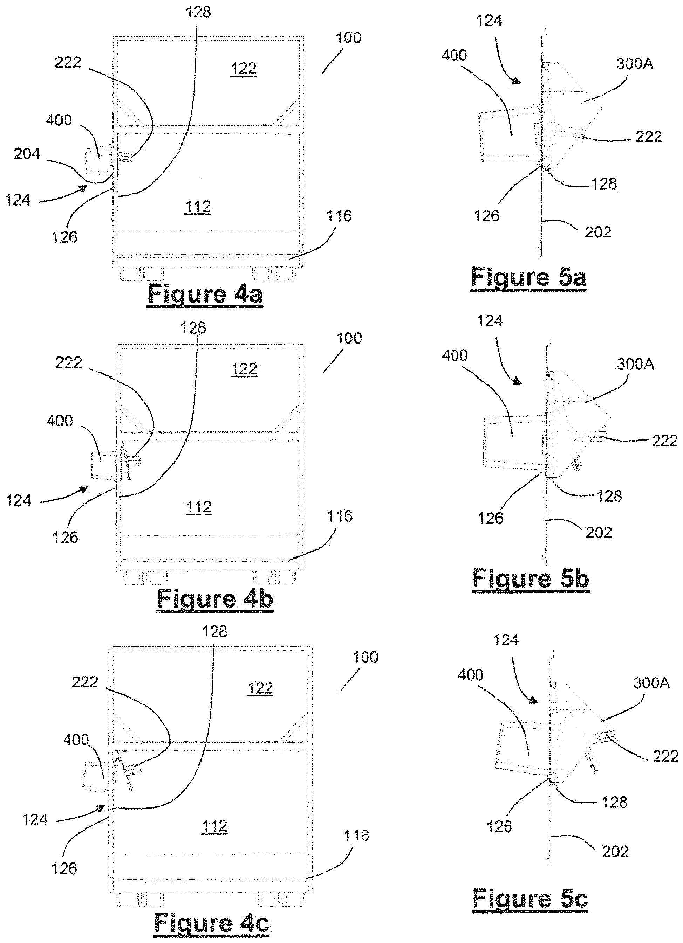

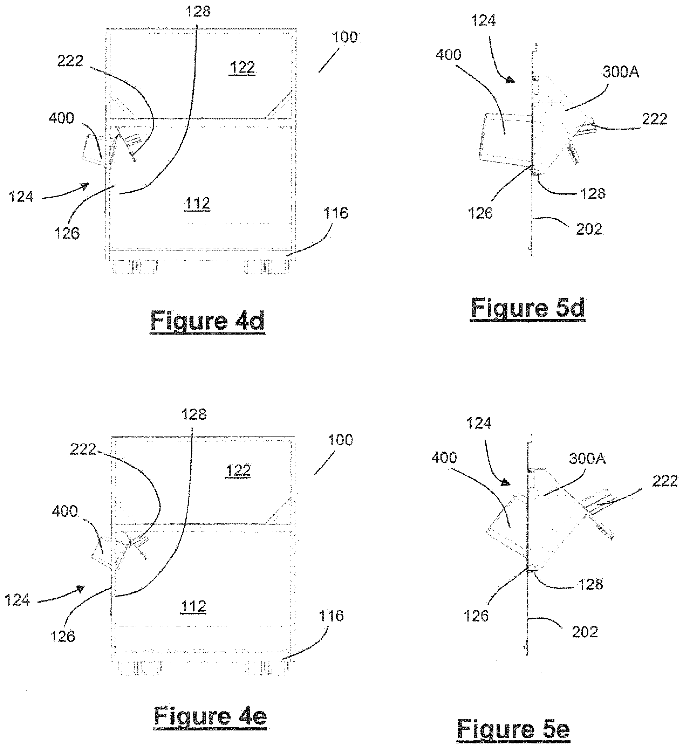

Referring now to Figures 4a to 4e inclusive and Figures 5a to 5e inclusive, the operation of the refuse collection door assembly 124 of the refuse collection compartment 112 will be detailed. The refuse collection bin 400 is hung on the refuse collection bin mounting hooks 204 of the outer frame 126. The refuse collection bin 400 is then rotated on the refuse collection bin mounting hooks 204 so as to form a substantially full seal with an outer face of the frame-shaped outer plate 126. This substantially sealed position is shown in Figures 4a and 5a. As an operator pushes the refuse collection bin 400 against the outer plate 126, the outer plate 126 will rotate about its lower hinge and rotate towards the refuse collection compartment 112. The outer plate 126 will engage against the inner plate 128 by way of the rollers 208 and will exert a force against the inner plate 128. This force will cause the inner plate 128 to rotate about its upper hinge and rotate inwardly into the refuse collection compartment 112. As the inner plate 128 rotates inwardly into the refuse collection compartment, the outer plate 126 will be permitted to continue to rotate about its lower axis and inwardly into the refuse collection compartment 112 also. The rollers 208 facilitate the sliding of the outer plate 126 along the inner plate 128 as they both rotate inwardly towards the refuse collection compartment 112. This is seen in Figures 4b and 5b. As can be seen in Figures 4c, 4d, 5c and 5d, the rollers will facilitate the outer plate 126 to slide along an outer face of the inner plate 128 as the outer plate 126 force the inner plate 128 to rotate. Referring now to Figures 4e and 5e, the refuse (not shown) in the refuse collection bin 400 will be tipped out of the refuse collection bin 40 and disposed of into the refuse collection compartment 112, with the refuse passing through the refuse receiving hole 214 in the outer plate 126 (and/or through a refuse receiving hole on an adaptor plate - not shown). Once emptied, the refuse collection bin 400 is rotated on the refuse collection bin mounting hooks 204, back out of the refuse collection compartment 112 and the inner plate 128 and the outer plate 126 return to a closed position as shown in Figures 4a and 5a.

To further assist with the closing of the refuse collection door assembly 124, as can be seen in Figure 8, the upper hinge of the inner plate 128 may be an offset upper hinge so as to assist in biasing the inner plate 128 towards a closed position. It will be understood that the offset hinge is preferable located between the side wall of the refuse compartment 112 and the outer ace of the inner plate 128 as this will cause the inner plate 128 to hang off-horizontal with its lower end extending towards the outer plate 126. The combination of the offset upper hinge on the uppermost edge 206 of the inner plate 128, and the curved securing arms 211 encourage the inner plate 128 and the outer plate 126 to remain in a closed position. The offset hinge of the inner plate 128 will cause the inner plate 128 to be angled slightly towards the outer plate, when the plates 126, 128 are hanging under gravity in the closed position.

The operation of the collection of the refuse is described again briefly with reference to Figures 6, 7a and 7b. In Figure 6, the refuse collection bin 400 is hung on the refuse collection bin mounting hooks 204 which can be seen to depend outwardly from the outer plate 126. Looking now at Figure 7a, the refuse collection bin 400 is rotated to be in abutment against the outer face of the outer plate 126. A seal is formed between the upper lip edge of the refuse collection bin 400 and the outer face of the outer plate 126. When the refuse collection bin 400 is rotated further, the outer plate 126 will rotate inwardly into the refuse collection compartment 112, forcing the inner plate 128 to also rotate inwardly into the refuse collection compartment 112, and allow refuse in the refuse collection bin 400 to be disposed of into the refuse collection compartment 112.

It will be readily understood that the purpose of the refuse collection door assembly 124 of the present invention is to facilitate the creation of a safe working environment for operators by reducing the noise level which they are exposed to, and obviate the possibility that any refuse could rebound out of a refuse collection compartment back towards the operator.

It will be further understood that the purpose of the refuse collection door assembly 124 of the present invention when mounted on a standing bin structure is to facilitate the creation of a safe public environment for user of the bin by reducing the possibility that any refuse could rebound out of the standing bin structure when refuse is emptied into it. Moreover, the refuse collection door assembly 124 of the present invention will also reduce the noise level which users and passers-by are exposed to when refuse is emptied into the standing bin structure.

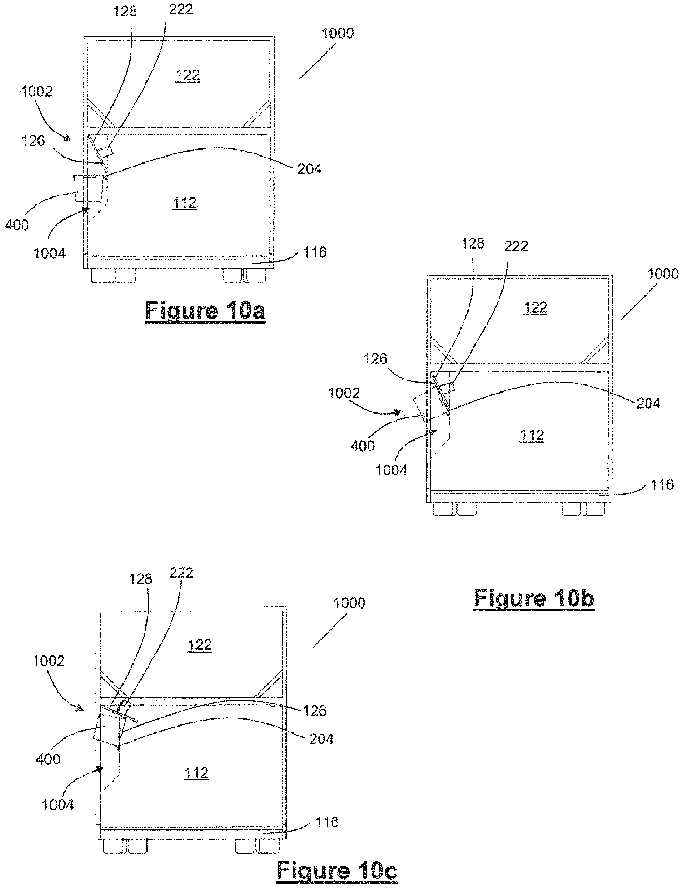

In a further embodiment, the outer plate 126 and/or the inner plate 128 may be angled relative to the horizontal such that a refuse collection bin would not need to be rotated on the refuse collection bin mounting hooks to a truly vertical position before forming a seal between the upper edge of the refuse collection bin and the outer face of the outer plate 126. Such an embodiment is shown in Figures 10a through 10c inclusive. The outer plate 126 is angled to allow such a seal to be formed before the refuse collection bin 400 is rotated 90° from a starting, substantially horizontal position.

Referring to Figure 10a, a refuse collection vehicle indicated generally by reference numeral 1000 is shown. The refuse collection vehicle 1000 comprises a refuse collection door assembly indicated generally by reference numeral 1002 which is provided in accordance with this further embodiment of the present invention. The refuse collection door assembly 1002 is preferably provided within a recess, indicated generally by reference numeral 1004, of the refuse collection vehicle 1000.

In use, and referring to Figures 10a to 10c inclusive, the refuse collection bin 400 will be hung, or attached in some manner, on the refuse collection bin mounting hooks 204 in a substantially horizontal position. The refuse collection bin 400 is then rotated on the refuse collection bin mounting hooks 204 so as to form a substantially full seal with an outer face of the frame-shaped outer plate 126. As the outer plate 126 and the inner plate 128 are angled relative to the horizontal, the refuse collection bin 400 will be rotated less than 90° on the refuse collection bin mounting hooks 204 prior to forming a substantially full seal with an outer face of the frame-shaped outer plate 126. In order to accommodate the outer plate 126 and the inner plate 128 being angled relative to the horizontal, there is a recess 1004 set into a side wall of the refuse collection vehicle 1000 and of the refuse collection compartment 112. In the embodiment shown in Figures 10a through 10c, the refuse collection bin 400 will only be required to be rotated by approximately 60° by an operator prior to forming the substantially full seal with the outer face of the frame-shaped outer plate 126 as shown in Figure 10b. As the operator (not shown) continues to rotate the refuse collection bin 400 about the refuse collection bin mounting hooks 204, the refuse collection bin 400 will exert a pushing force against the outer plate 126. As a consequence, the outer plate 126 will rotate about its lower-edge hinge (adjacent the refuse collection bin mounting hooks 204) and the outer plate 126 will rotate inwardly towards the refuse collection compartment 112. In doing so, the outer plate 126 will engage against the inner plate 128 by way of elements on the outer plate and will exert a force against the inner plate 128. This force will cause the inner plate 128 to rotate about its upper-edge hinge and also rotate inwardly into the refuse collection compartment 112. As the inner plate 128 rotates inwardly into the refuse collection compartment, the outer plate 126 will be permitted to continue to rotate about its lower axis and also travel inwardly into the refuse collection compartment 112. With reference to Figure 10c, the refuse (not shown) in the refuse collection bin 400 will be tipped out of the refuse collection bin 400 and disposed of into the refuse collection compartment 112, with the refuse passing through the refuse receiving hole 214 in the outer plate 126 (and/or through a refuse receiving hole on an adaptor plate - not shown). Once emptied, the refuse collection bin 400 is rotated on the refuse collection bin mounting hooks 204, back out of the refuse collection compartment 112 and the inner plate 128 and the outer plate 126 return to a closed position, in the off-horizontal position, as shown in Figure 10a.

In a further embodiment not shown and not according the invention, the refuse collection door assembly may comprise a flexible roller shutter in place of the inner plate 128. The outer plate 126 is rigid and used as described hereinbefore. The flexible roller shutter is connected along its uppermost edge to the refuse collection compartment and its lowermost edge would hang down freely inside and adjacent to the outer plate 126. When the outer plate 126 is in the closed position, the flexible roller shutter would be sufficiently long so as to cover, and thus close off, the refuse receiving through hole on the outer plate 126. When the outer plate 126 is rotated into its open position, such that the outer plate 126 is rotated inwardly into the refuse compartment 112, the flexible roller shutter will not swing into the refuse compartment 112. Rather the outer plate 126 will engage against the flexible roller shutter and will cause the flexible roller shutter to deform and thus allow the outer plate 126 to swing past it, with the flexible roller cover draping itself over the uppermost edge of the outer plate 126. In this way, less clearance is required inside the refuse compartment 112 as the flexible roller shutter will drape over the top edge of the outer plate as the outer plate 126 is rotated into and out from the refuse compartment 112.

In a yet a further embodiment not shown and not according to the invention, the refuse collection door assembly comprises a biased roller mounting an extendable and retractable cover in place of the inner plate 128. The outer plate 126 is rigid and used as described hereinbefore. The biased roller is connected to an inside face of the refuse collection compartment 112 and a free end of the cover is connected to a uppermost edge of the outer plate 126. The cover is extended, against the bias of the roller, when the outer plate 126 is rotated inwardly into the refuse compartment 112, and the cover is allowed to retract, acting with the bias of the roller, when the outer plate 126 is rotated out of the refuse compartment 112. A flap may be provided on an inside face of the outer plate 126, the flap being hinged along its uppermost edge to an upper edge of the refuse receiving through hole so as to act as a cover closing off the hole when the outer plate 126 is in its substantially vertical, closed position. It will be appreciated that the cover material would have to be of a durable yet flexible material, such as an interwoven plastics material.

The terms "comprise" and "include", and any variations thereof required for grammatical reasons, are to be considered as interchangeable and accorded the widest possible interpretation.

It will be understood that the components shown in any of the drawings are not necessarily drawn to scale, and, like parts shown in several drawings are designated the same reference numerals.

## Claims

1. A refuse collection door assembly (124) suitable for use with a refuse collection compartment (112), the refuse collection door assembly (124) comprising an inner plate (128) and an outer plate (126) arranged adjacent each other;
whereby, the inner plate (128) is hinged (206) along its uppermost edge to the refuse collection compartment (112), and, the outer plate (126) is hinged along its lowermost edge to the refuse collection compartment (112) ;
the outer plate (126) comprising a refuse receiving through hole (214) which allows refuse to pass through to the refuse collection compartment (112); and
the outer plate (126) comprises elements (208) provided adjacent an uppermost edge (210) of the outer plate (126) which engage against the inner plate (128) when the outer plate (126) is rotated toward the inner plate (128), **characterised in that** the elements (208) on the outer plate (126) are friction reducing elements (208) comprising rollers (208) and the inner plate (128) comprises securing arms (211) having a slight curvature provided on an outer face of the inner plate (128) to accept the rollers (208) when the inner plate (128) is in its closed position, and due to the slight curvature of the securing arms (211), the rollers (208) when abutting against the securing arms (211) cause the securing arms (211) to pull on the inner plate (128) and urge the inner plate (128) to rotate outwardly towards the outer plate (126).

2. The refuse collection door assembly (124) as claimed in claim 1, wherein, the inner plate (128) is hinged along its uppermost edge to a side wall of the refuse collection compartment (112), and
the outer plate (126) is hinged along its lowermost edge to a side wall of the refuse collection compartment (112).

3. The refuse collection door assembly (124) as claimed in any preceding claims,
wherein, refuse collection bin mounting hooks (204) are provided on the outer plate (126), adjacent the lowermost edge of the outer plate (126).

4. The refuse collection door assembly (124) as claimed in any preceding claims, wherein, side wings (300A, 300B) are provided to assist in creating a substantially full seal when emptying refuse into the refuse collection compartment (112).

5. The refuse collection door assembly (124) as claimed in claim 4, wherein, the side wings (300A, 300B) are for securing to the side wall of the refuse collection compartment (112) to depend inwardly into the refuse collection compartment (112).

6. The refuse collection door assembly (124) as claimed in any preceding claims, wherein, lip seals are provided along side edges of the inner plate (128) and/or the outer plate (126).

7. The refuse collection door assembly (124) as claimed in any preceding claims, wherein, a lip seal is provided along the uppermost edge (210) of the outer plate (126).

8. The refuse collection door assembly (124) as claimed in any preceding claim, wherein, the inner plate (128) comprises an offset hinge (206) along its uppermost edge which angles the inner plate (128) towards the outer plate (126), when the inner plate (128) is in a closed position.

9. The refuse collection door assembly (124) as claimed in claim 8, wherein the offset hinge (206) assists in biasing the inner plate (128) towards a closed position.

10. The refuse collection door assembly (124) as claimed in any preceding claim, wherein the refuse collection door assembly (124) comprises a locking means (218) to secure the inner plate (128) to the outer plate (126) and maintain the refuse collection door assembly (124) in a closed position.

## Patentansprüche

1. Müllsammlungs-Türanordnung (124), die zur Verwendung mit einem Müllsammeifach (112) geeignet ist, wobei die Müllsammlungs-Türanordnung (124) eine Innenplatte (128) und eine Außenplatte (126) aufweist, die aneinander angrenzend angeordnet sind;
wobei die Innenplatte (128) entlang ihrer obersten Kante mit dem Müllsammelfach (112) gelenkig verbunden ist (206), und die Außenplatte (126) entlang ihrer untersten Kante mit dem Müllsammelfach (112) gelenkig verbunden ist;
die Außenplatte (126) eine Durchgangsöffnung zur Aufnahme von Müll (214) aufweist, die den Durchgang von Müll in das Müllsammelfach (112) ermöglicht; und
die Außenplatte (126) Elemente (208) aufweist, die angrenzend an eine oberste Kante (210) der Außenplatte (126) vorgesehen sind, die an der Innenplatte (128) angreifen, wenn die Außenplatte (126) in Richtung auf die Innenplatte (128) gedreht wird,
**dadurch gekennzeichnet, dass** die Elemente (208) auf der Außenplatte (126) reibungsvermindernde Elemente (208) sind, die Rollen (208) aufweisen, und die Innenplatte (128) Sicherungsarme (211) aufweist, die eine leichte Krümmung aufweisen, die an einer Außenfläche der Innenplatte (128) vorgesehen sind, um die Rollen (208) aufzunehmen, wenn sich die Innenplatte (128) in ihrer geschlossenen Position befindet, und wobei aufgrund der leichten Krümmung der Sicherungsarme (211) die Rollen (208) bewirken, wenn sie gegen die Sicherungsarme (211) stoßen, dass die Sicherungsarme (211) an der Innenplatte (128) ziehen und die Innenplatte (128) dazu veranlassen, sich nach außen in Richtung der Außenplatte (126) zu drehen.

2. Müllsammlungs-Türanordnung (124) nach Anspruch 1, wobei die Innenplatte (128) entlang ihrer obersten Kante gelenkig mit einer Seitenwand des Müllsammelfachs (112) verbunden ist und die Außenplatte (126) entlang ihrer untersten Kante gelenkig mit einer Seitenwand des Müllsammelfachs (112) verbunden ist.

3. Müllsammlungs-Türanordnung (124) gemäß einem der vorhergehenden Ansprüche, wobei an der Außenplatte (126) angrenzend an die unterste Kante der Außenplatte (126) Befestigungshaken (204) für den Müllsammelbehälter vorgesehen sind.

4. Müllsammlungs-Türanordnung (124) gemäß einem der vorhergehenden Ansprüche, wobei Seitenflügel (300A, 300B) vorgesehen sind, um beim Entleeren des Mülls in das Müllsammelfach (112) die Schaffung einer im Wesentlichen vollständigen Abdichtung zu unterstützen.

5. Müllsammlungs-Türanordnung (124) gemäß Anspruch 4, wobei die Seitenflügel (300A, 300B) zur Befestigung an der Seitenwand des Müllsammelfachs (112) da sind, so dass sie nach innen in das Müllsammelfach (112) hängen.

6. Müllsammlungs-Türanordnung (124) gemäß einem der vorhergehenden Ansprüche, wobei Lippendichtungen entlang der Seitenkanten der Innenplatte (128) und/oder der Außenplatte (126) bereitgestellt sind.

7. Müllsammlungs-Türanordnung (124) nach einem der vorhergehenden Ansprüche, wobei eine Lippendichtung entlang der obersten Kante (210) der Außenplatte (126) vorgesehen ist.

8. Müllsammlungs-Türanordnung (124) gemäß einem der vorhergehenden Ansprüche, wobei die Innenplatte (128) ein versetztes Scharnier (206) entlang ihrer obersten Kante aufweist, das die Innenplatte (128) in Richtung der Außenplatte (126) abwinkelt, wenn die Innenplatte (128) in einer geschlossenen Position ist.

9. Müllsammlungs-Türanordnung (124) gemäß Anspruch 8, wobei das versetzte Scharnier (206) dazu beiträgt, die Innenplatte (128) in eine geschlossene Position vorzuspannen.

10. Müllsammlungs-Türanordnung (124) gemäß einem der vorhergehenden Ansprüche, wobei die Müllsammlungs-Türanordnung (124) ein Verriegelungsmittel (218) umfasst, um die Innenplatte (128) an der Außenplatte (126) zu befestigen und die Müllsammlungs-Türanordnung (124) in einer geschlossenen Position zu halten.

## Revendications

1. Ensemble de porte de collecte d'ordures (124) approprié pour être utilisé avec un compartiment de collecte d'ordures (112), l'ensemble de porte de collecte d'ordures (124) comprenant une plaque intérieure (128) et une plaque extérieure (126) disposées l'une à côté de l'autre ;
dans lequel, la plaque intérieure (128) est articulée (206) le long de son bord supérieur vers le compartiment de collecte d'ordures (112), et la plaque extérieure (126) est articulée le long de son bord le plus bas vers le compartiment de collecte d'ordures (112) ;
la plaque extérieure (126) comprenant un trou traversant de réception d'ordures (214) qui permet aux ordures de passer à travers le compartiment de collecte d'ordures (112) ; et
la plaque extérieure (126) comprend des éléments (208) prévus à côté d'un bord supérieur (210) de la plaque extérieure (126) qui viennent en prise contre la plaque intérieure (128) lorsque la plaque extérieure (126) est tournée vers la plaque intérieure (128), **caractérisé en ce que** les éléments (208) sur la plaque extérieure (126) sont des éléments de réduction de frottement (208) comprenant des rouleaux (208) et la plaque intérieure (128) comprend des bras de fixation (211) présentant une légère courbure lorsque la plaque intérieure (128) est en position fermée, prévue sur une face extérieure de la plaque intérieure (128) pour recevoir les rouleaux (208) et en raison de la légère courbure des bras de fixation (211), les rouleaux (208), lorsqu'ils viennent en butée contre les bras de fixation (211), amènent les bras de fixation (211) à tirer la plaque intérieure (128) et poussent la plaque intérieure (128) à tourner vers l'extérieur vers la plaque extérieure (126).

2. Ensemble de porte de collecte d'ordures (124) selon la revendication 1, dans lequel, la plaque intérieure (128) est articulée le long de son bord le plus haut sur une paroi latérale du compartiment de collecte d'ordures (112), et la plaque extérieure (126) est articulée le long de son bord le plus bas sur une paroi latérale du compartiment de collecte d'ordures (112).

3. Ensemble de porte de collecte d'ordures (124) selon l'une quelconque des revendications précédentes, dans lequel des crochets de montage de bac de collecte d'ordures (204) sont prévus sur la plaque extérieure (126), adjacente au bord le plus bas de la plaque extérieure (126).

4. Ensemble de porte de collecte d'ordures (124) selon l'une quelconque des revendications précédentes, dans lequel des ailes latérales (300A, 300B) sont prévues pour aider à créer un joint sensiblement plein lors du vidage des ordures dans le compartiment de collecte d'ordures (112).

5. Ensemble de porte de collecte d'ordures (124) selon la revendication 4, dans lequel les ailes latérales (300A, 300B) sont destinées à être fixées à la paroi latérale du compartiment de collecte d'ordures (112) pour dépasser vers l'intérieur dans le compartiment de collecte d'ordures (112).

6. Ensemble de porte de collecte d'ordures (124) selon l'une quelconque des revendications précédentes, dans lequel des joints à lèvres sont prévus le long des bords latéraux de la plaque intérieure (128) et/ou de la plaque extérieure (126).

7. Ensemble de porte de collecte d'ordures (124) selon l'une quelconque des revendications précédentes, dans lequel un joint à lèvre est prévu le long du bord supérieur (210) de la plaque extérieure (126).

8. Ensemble de porte de collecte d'ordures (124) selon l'une quelconque des revendications précédentes, dans lequel la plaque intérieure (128) comprend une articulation décalée (206) le long de son bord supérieur qui oriente la plaque intérieure (128) vers la plaque extérieure (126), lorsque la plaque intérieure (128) est dans une position fermée.

9. Ensemble de porte de collecte d'ordures (124) selon la revendication 8, dans lequel l'articulation décalée (206) aide à incliner la plaque intérieure (128) vers une position fermée.

10. Ensemble de porte de collecte d'ordures (124) selon l'une quelconque des revendications précédentes, dans lequel l'ensemble de porte de collecte d'ordures (124) comprend un moyen de verrouillage (218) pour fixer la plaque intérieure (128) à la plaque extérieure (126) et maintenir l'ensemble de porte de collecte d'ordures (124) dans une position fermée.
